# EUROPEAN PATENT APPLICATION

(11) **EP 3 836 099 A1**
(43) Date of publication of application: **16.06.2021**
(21) Application number: 20213167.8
(22) Date of filing: 10.12.2020
(51) Int. Cl.: G07F 17/32, G06Q 20/34

(54) **ROLLING ENCODING SCHEMA FOR RFID TAGS**

(30) Priority: 13.12.2019 JP 2019225452
(71) Applicant: Angel Playing Cards Co., Ltd., Shiga 527-0232 (JP)
(72) Inventor: GELINOTTE, Emmanuel, 21420 Savigny Les Beaune (FR); SOUILLOT, Jonathan, 71380 Saint-Marcel (FR)
(74) Representative: Bardehle Pagenberg Partnerschaft mbB Patentanwälte Rechtsanwälte

(57) **Abstract**

A gaming chip reader can read one or more gaming chips from an antenna. Drawers can be read from the gaming chip. A version can be identified from the drawers. A memory mapping can be decrypted and data describing the gaming chip can be decoded from the drawers using the decrypted memory map. The data describing the gaming chip can be validated against a gaming chip inventory dataset.

## Description

### BACKGROUND

Gaming chips can be used in a casino in lieu of currency. The gaming chips can be made from various materials including colored metals, injection-molded plastics, and compression molded clay. Some casinos can include technology to identify a gaming chip such as RFID tags. RFID tags can include memory.

### SUMMARY

These and other aspects, objects, features, and embodiments will become apparent to a person of ordinary skill in the art upon consideration of the following detailed description of illustrative embodiments exemplifying the best mode as presently perceived.

### BRIEF DESCRIPTION OF THE DRAWINGS

For a more complete understanding of the embodiments and the advantages thereof, reference is now made to the following description, in conjunction with the accompanying figures briefly described as follows:
FIG. 1 is an illustration of data fields stored on a gaming chip according to various embodiments of the present disclosure.
FIG. 2 is a drawing of a gaming environment according to various example embodiments.
FIG. 3 is an illustration of data fields stored in drawers of a gaming chip according to various example embodiments.
FIG. 4 is an illustration of encoded data fields stored in drawers of a gaming chip according to various example embodiments.
FIG. 5 is an illustration of an example flowchart of certain functionality implemented by portions of chip validation system executed in a computing environment in the gaming environment of FIG. 2 according to various embodiments of the present disclosure.
FIG. 6 is an illustration of an example flowchart of certain functionality implemented by portions of software executed in a computing device according to various embodiments of the present disclosure.
FIG. 7 is a schematic block diagram that illustrates an example computing device employed in the gaming environment of FIG. 2 according to various embodiments.

The drawings illustrate only example embodiments and are therefore not to be considered limiting of the scope described herein, as other equally effective embodiments are within the scope and spirit of this disclosure. The elements and features shown in the drawings are not necessarily drawn to scale, emphasis instead being placed upon clearly illustrating the principles of the embodiments. Additionally, certain dimensions may be exaggerated to help visually convey certain principles. In the drawings, similar reference numerals between figures designate like or corresponding, but not necessarily the same, elements.

### DETAILED DESCRIPTION

In the following paragraphs, the embodiments are described in further detail by way of example with reference to the attached drawings. In the description, well known components, methods, and/or processing techniques are omitted or briefly described so as not to obscure the embodiments. As used herein, the "present disclosure" refers to any one of the embodiments described herein and any equivalents. Furthermore, reference to various feature(s) of the "present embodiment" is not to suggest that all embodiments must include the referenced feature(s).

Among embodiments, some aspects of the present disclosure are implemented by a computer program executed by one or more processors, as described and illustrated. As would be apparent to one having ordinary skill in the art, one or more embodiments may be implemented, at least in part, by computer-readable instructions in various forms, and the present disclosure is not intended to be limiting to a particular set or sequence of instructions executed by the processor.

The embodiments described herein are not limited in application to the details set forth in the following description or illustrated in the drawings. The disclosed subject matter is capable of other embodiments and of being practiced or carried out in various ways. Also, the phraseology and terminology used herein is for the purpose of description and should not be regarded as limiting. The use of "including," "comprising," or "having" and variations thereof herein is meant to encompass the items listed thereafter, additional items, and equivalents thereof. The terms "connected" and "coupled" are used broadly and encompass both direct and indirect connections and couplings. In addition, the terms "connected" and "coupled" are not limited to electrical, physical, or mechanical connections or couplings. As used herein the terms "machine," "computer," "server," and "work station" are not limited to a device with a single processor, but may encompass multiple devices (e.g., computers) linked in a system, devices with multiple processors, special purpose devices, devices with various peripherals and input and output devices, software acting as a computer or server, and combinations of the above.

Although various aspects of the present disclosure refer to a gaming table, it can be appreciated that the various aspects can be used with respect to any gaming area including a casino cage, a bank, a vault, a gaming table, or any other location where gaming chips are used. A dealer can facilitate a wagering game at the gaming table. Wagering games can include a card game, a dice game, a wheel-based game, or some other wagering game. One or more patrons can wager gaming chips at the gaming table. The gaming chips can be counted and verified by various components of a networked environment as discussed herein.

The gaming chips can include any chip, plaque, jeton, or other gaming currency that may be used in a casino or gaming room. The gaming chips can represent a value that is predetermined or not. The gaming chips can be made from a rigid plastic material or clay to obtain a structure that is solid enough to resist conditions of use in casinos. Gaming chips can be used throughout a casino. For example, at gaming tables, gaming chips can be received for play or the conclusion of a game or hand, cash can be received and gaming chips paid out (buy-in), and gaming chips may be paid out during play. In a cashier area, gaming chips can be received and cash can be paid out (cash out). Alternatively, cash can be received and gaming chips can be paid out (buy-in).

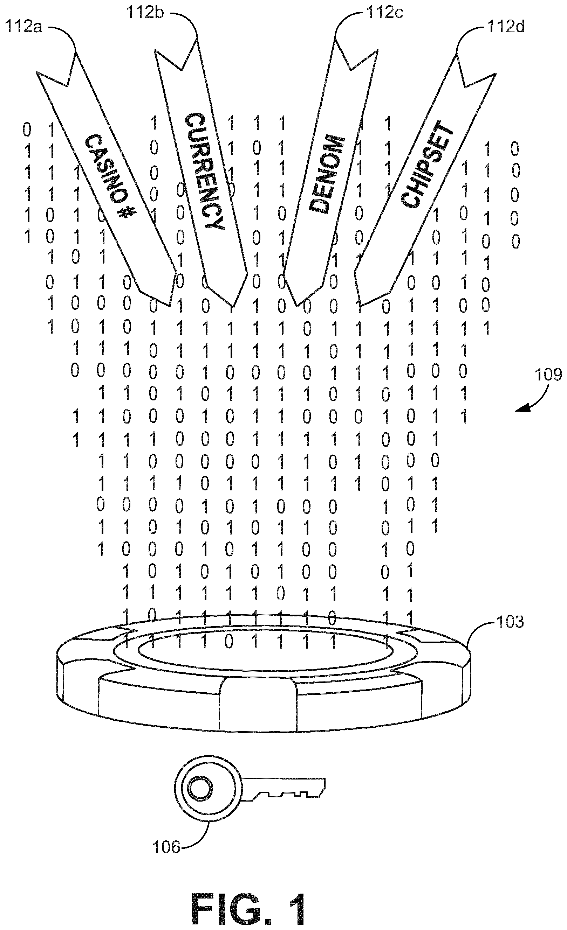

Turning now to the drawings, exemplary embodiments are described in detail. With reference to FIG. 1, shown is an illustration of a gaming chip 103 according to various embodiments of the present disclosure. FIG. 1 illustrates 0s and 1s flowing down on the gaming chip 103 to graphically represent the concept of data being stored onto a memory device in the gaming chip 103. The gaming chip 103 can include a memory device that can store information about the gaming chip 103 among other data. The data can be encrypted when stored on the memory device using a key 106. The memory device can store various data 109 including one or more data fields.

The memory device can be separated into various drawers, which can correspond to a memory page, a memory block, a byte, a word, a preconfigured number of bits or bytes, files in a file system, or some other segment of storage. In some embodiments, the memory device can be one-time programmable (OTP). In other embodiments, the memory device can be lockable such that the memory device is read/write until a locking event occurs at which point the memory device becomes read only. In yet other embodiments, various segments of memory in the memory device can have different properties. As an example, a first segment can be read only memory, a second segment can be lockable, and a third segment can be read/write memory.

The casino industry can use RFID technology to protect and track currency products such as gaming chips 103. The gaming chips 103 can include RFID tags that provide an identifier for each gaming chip 103 and can include the memory device to store information of the gaming chip 103. The information can include, but is not limited to, the value of the gaming chip 103, the currency of the gaming chip 103, the negotiability, set information, gaming room information, the casino identifiers owning the gaming chips 103, and the manufacturing information among other information. A read/write memory area of the memory device can store information that can be updated during the casino operations. The serial numbers can be burnt or locked into the RFID tag during manufacturing of the RFID tag. Further, other information can be programmed and locked during manufacturing of the gaming chips 103.

The memory device of the RFID tags can include functionalities like Lock Pointers or OTP memory to guarantee that the information can be irreversibly burnt such that modification is not possible. In order to store the currency information in the memory device before shipping, the manufacturer of the gaming chips 103 can utilize software systems combined with RFID transceivers and antennas to write to the memory device and lock it. The memory in the memory device is typically organized in blocks or pages, referred to herein as drawers, to locate each piece of information. As an example, a PJM STACKTAG integrated circuit can include a 4 kilobits user memory, organized in 256 pages of 16 bits. The ICODE ILT-M integrated circuit includes 1 kilobits of ROM memory organized in 64 pages of 16 bits. These pages can also be called words or blocks. In some embodiments, the drawers can receive a 16 bit binary value although other sizes of values can be received. The 16 bit pages can be divided into two or more groups to allow different information storage. As an example, bits 0 to 11 can be used to define the monetary value, and bits 12 to 15 can be used to define a currency identifier.

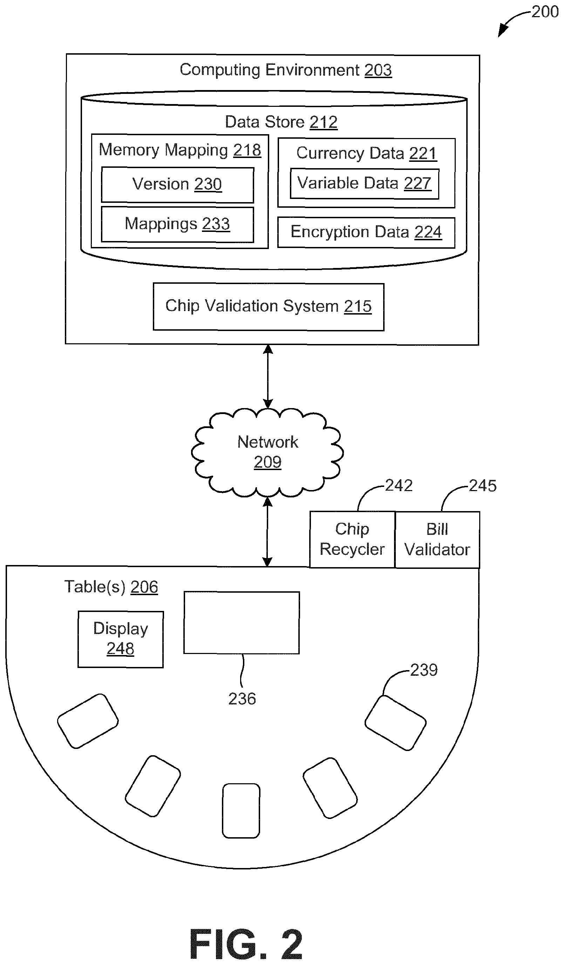

Turning to FIG. 2, shown is a gaming environment 200 according to various embodiments of the present disclosure. The gaming environment 200 includes a computing environment 203 and one or more gaming tables 206, which are in data communication with each other via a network 209. The network 209 includes, for example, the Internet, intranets, extranets, wide area networks (WANs), local area networks (LANs), wired networks, wireless networks, or other suitable networks, etc., or any combination of two or more such networks. For example, such networks may comprise satellite networks, cable networks, Ethernet networks, and other types of networks.

The computing environment 203 can include, for example, a server computer or any other system providing computing capability. Alternatively, the computing environment 203 may employ a plurality of computing devices that may be arranged, for example, in one or more server banks or computer banks or other arrangements. Such computing devices may be located in a single installation or may be distributed among many different geographical locations. For example, the computing environment 203 may include a plurality of computing devices that together may comprise a hosted computing resource, a grid computing resource, and/or any other distributed computing arrangement. In some cases, the computing environment 203 may correspond to an elastic computing resource where the allotted capacity of processing, network, storage, or other computing-related resources may vary over time.

Various applications and/or other functionality may be executed in the computing environment 203 according to various embodiments. Also, various data is stored in a data store 212 that is accessible to the computing environment 203. The data store 212 may be representative of a plurality of data stores 212 as can be appreciated. The data stored in the data store 212, for example, is associated with the operation of the various applications and/or functional entities described below.

The components executed on the computing environment 203, for example, include a chip validation system 215, and other applications, services, processes, systems, engines, or functionality not discussed in detail herein. The chip validation system 215 is executed to validate gaming chips 103 used within the casino. As an example, an RFID tag in RFID-enabled gaming chip can be read on a gaming chip reader of a gaming table 206.

The data stored in the data store 212 includes, for example, memory mappings 218, currency data 221, encryption data 224, and potentially other data. The currency data 221 can include variable data 227 and the memory mappings 218 can include version 230 and mappings 233. The mappings 233 can include information for decrypting data stored on gaming chips 103 for each of the versions 230. The currency data 221 can include a list of all active gaming chips including any identifiers associated with the gaming chips, such as, for example, RFID tag identifier and other identifiers. The currency data 221 can include all gaming chips 103 authorized for use at one or more casinos. The currency data 221 can be a gaming chip inventory dataset.

The memory mapping 218 can be stored in an encrypted format. To access the memory mapping 218, the chip validation system 215 can first decrypt the encrypted memory mapping 218 to generate a decrypted memory mapping. The chip validation 215 can identify an encryption key that corresponds to the memory mapping 218.

The encryption key can be stored in a protected location or on a local drive. The encryption key or location of the encryption key can be stored in encryption data 224. The encryption key can be signed by a trusted certificate authority. In some embodiments, the chip validation system 215 can receive the encryption key from a secure server (not shown). The secure server can be trusted based on secured communications. The chip validation system 215 can secure communications using public key infrastructure, such as, for example, using a simple certificate enrollment protocol (SCEP) system or other key infrastructure.

The currency data 221 can be stored in an encrypted format. The currency data 221 can be encrypted with a different encryption key or method than the memory mapping 218. The encryption key or location of the encryption key for the currency data can be stored in encryption data 224. As such, an intruder that is able to gain access to the memory mapping 218 cannot access the currency data 221, or vice versa. According to one example embodiment, the currency data 221 can be stored in a database while the memory mapping 218 can be stored as a flat file.

The memory mapping 218 and currency data 221 can be stored in two different protected locations. In one example, the chip validation system 215 can gain access to the two different protected locations using authentication credentials. The authentication credentials for each protected location can be different. The protected location can correspond to a disc drive, a memory location, a file, a database service, an external server, or some other storage location. The currency data 221 can store information about where each gaming chip 103 is read within the casino. Using this data, the chip validation system 215 can track where the gaming chips 103 move throughout a casino.

The gaming table 206 is representative of a plurality of gaming tables that may be coupled to the network 209. The gaming table 206 can include, for example, one or more computing devices with a processor-based system such as a computer system. Such a computer system may be embodied in the form of an embedded computing device or other devices with like capability. The gaming table 206 can a chip tray 236, one or more bet spots 239, a chip recycler 242, a bill validator 245, and a display 248.

A gaming chip reader, such as an RFID antenna, can be positioned at the chip tray 236, at each of the bet spots 239, at the chip recycler 242, and in another positions. A gaming chip reader can also be placed at a casino cage, a bank, a vault, or any other location where gaming chips are used. The gaming table 206 can read RFID tags from RFID-enabled gaming chips 103 using the gaming chip reader. As an example, the gaming table 206 can read one or more drawers from each gaming chip 103 positioned on a gaming chip reader. The data stored in the drawers can correspond to encrypted information about the gaming chip 103. The drawers from the RFID tags can be transmitted to the chip validation system 215.

The chip validation system 215 can receive the drawers from the gaming table 206. The chip validation system 215 can identify a version from the drawers. In some embodiments, the version can be stored in a predetermined positon in the drawers for all gaming chip versions. In other embodiments, the version can be looked up based on a serial number read from the RFID tag in the gaming chip 103. The chip validation system 215 can search the versions 230 for the identified version in the memory mapping 218. To search the memory mapping 218, the chip validation system 215 can obtain a decryption key corresponding to the encrypted memory mapping 218 and decrypt the encrypted memory mapping 218 to generate a decrypted memory mapping. The chip validation system 215 can identify a mapping 233 corresponding to the identified version from the gaming chip 103. The mapping 233 can include a schema to encode or decode the data stored in the drawers.

The chip validation system 215 can decode data describing the gaming chip 103 from the drawers using the mapping 233 that corresponds to the version of the gaming chip 103. The chip validation system 215 can decipher the mappings of bits/bytes of memory that correspond to segments of variables stored in the drawers. During the decode process, the chip validation system 215 can assemble the different segments for each variable in an order defined in the mappings 233. In some embodiments, the decode process can include decrypting the data stored in the drawers. When one or more gaming chips 103 that are read correspond to different versions 230, the chip validation system 215 can use different mappings 233 to decode each of the gaming chip 103. As an example, a first cipher from a first mapping 233 can be used for a gaming chip 103 of a first version 230, while a second cipher from a second mapping 233 can be used for a different gaming chip 103 corresponding to a second version 230.

The chip validation system 215 can perform the decryption using a decryption key corresponding to the specific version of gaming chips 103 stored in mappings 233. The decryption key can also correspond to all gaming chips 103 across all versions. In some embodiments, the data in the drawers is decrypted prior to deciphering the segments of the variables. In other embodiments, the data in the drawers is decrypted after the deciphering the segments of variables. In yet another embodiment, a decryption is used to decode the variables without the need for a decipher operation.

The currency data 221 may be rewritten each time the RFID tag of the gaming chip 103 is read by the gaming chip reader, or periodically. Along with this rewriting, the currency data 221 of the gaming chip 103 stored in the database is also rewritten. By matching the currency data 221 rewritten in the database with the currency data 221 read from the RFID tag of the gaming chip 103, the gaming chip 103 is verified. Thus, even if a counterfeiter creates a counterfeit gaming chip by copying the information stored in the RFID tag of the gaming chip 103, the currency data 221 of the counterfeit gaming chip is already rewritten in the database when the counterfeit gaming chip is used, and verification of such a counterfeit gaming chip will fail, it can be determined that it is a counterfeit gaming chip.

The chip validation system 215 can validate the gaming chips 103 against a gaming chip inventory dataset, such as, for example, the currency data 221. The validation of a gaming chip 103 can include authenticating the gaming chip 103 against the currency data 221 to ensure the gaming chip 103 is authentic. The chip validation system 215 can decrypt the currency data 221 to generate decrypted currency data 221. The chip validation system 215 can look up the serial number of the gaming chip 103 in the currency data 221. The chip validation system 215 can also authenticate the gaming chip 103 by verifying that one or more variables match the currency data 221. As an example, the chip validation system 215 can verify that the denomination, casino name, currency, and sales order number all match the values programmed when the gaming chip 103 was originally manufactured. The originally manufactured values stored on each gaming chip 103 can be stored in variable data 227. When new gaming chips 103 are deployed in a casino, the information for each new gaming chip 103 can be added to the currency data 221.

When a gaming chip 103 or set of gaming chips 103 is decommissioned, the chip validation system 215 can refuse to validate any gaming chips 103 that have been decommissioned. Further, the chip validation system 215 can initiate a remedial action when a decommissioned gaming chip 103 read on an antenna. As an example, an indicator can be illuminated or activated to signal to a dealer to confiscate the deactivated gaming chip 103. The display 248 can render information indicated details of the deactivated gaming chip 103. As an example, the display 248 can render a visual representation of the gaming chip 103 that was deactivated including a color pattern and denomination.

Other remedial actions can include stopping any future game, stopping a game until approval for an authorized user is received, alerting security, identifying a patron corresponding to the discrepancy and storing an indication of the discrepancy associated with an account of the patron, and other remedial actions. The level of an authorized user can be based on the discrepancy identified. For example, a higher level of authorized user can be required when a gaming chip 103 is identified as stolen in the currency data 221 or when a count, a denomination, or a total value of the deactivated gaming chips 103 exceeds a threshold.

The chip validation system 215 can have multiple tiers of thresholds corresponding to different levels of authorized user. In one example, the dealer can authorize resuming play when the value of the deactivated gaming chips 103 is below a first threshold, such as $10, a pit boss can authorize resuming play when the value of the deactivated gaming chips 103 is below a second threshold, such as $100, and security can authorize resuming play when the value of the deactivated gaming chips 103 is below a third threshold, such as $1,000. Further, a casino manager may be required to resume play when the deactivated gaming chips 103 exceeds the top threshold.

The thresholds may be based on past actions of a patron, dealer, or other authorized user associated with the discrepancy. For example, the chip validation system 215 can identify a patron with a history that includes a pattern of using deactivated gaming chips 103 or a total amount of deactivated gaming chips 103 exceeding a threshold, and initiate a more restrictive remedial action based on the repetition. For example, the more restrictive remedial action may require approval from a user with authority to authorize the sum of all historical discrepancies for the patron or to pull the patron aside for further questioning.

In some embodiments, the sum of all historical discrepancies can be limited to the discrepancies that have occurred since a previous more restrictive remedial action. Similarly, the chip validation system 215 can identify a dealer, pit boss, security officer, casino manager, or other casino employee with a history of using deactivated gaming chips 103. The chip validation system 215 can identify a user with a specific statistical property that exceeds a threshold. As an example, the chip validation system 215 can calculate a ratio of games played to deactivate gaming chips 103 identified. If the ratio exceeds a threshold, the chip validation system 215 can initiate a remedial action.

The chip validation system 215 can store information regarding the reading of the gaming chip 103. The gaming table 206 can determine a patron associated with a patron account placed a wager with the gaming chips 103 corresponding to the particular bet spot 239. The gaming table 206 can transmit a count of gaming chips read at each of the gaming chip readers including the identifiers and drawers from each gaming chip 103. In one embodiment, the gaming table 206 performs a read of all gaming chip readers at least once per game being played, and transmits the information to the chip validation system 215. The gaming table 206 can perform reads of all gaming chip readers several times per game. In some embodiments, the gaming table 206 sends any changes in reading of gaming chips 103 that occur during the game. The validation of each gaming chip 103 can be limited to once per time the gaming chip 103 is used on a gaming table 206.

The chip recycler 242 can operate in a similar fashion to a coin recycler. The chip recycler 242 can be used in addition to or in place of chip tray 236. At the end of game or hand, if a dealer has collected gaming chips 103 from patrons, the gaming chips 103 can be placed into an input area, such as a funnel, hopper or tube, and then validated (authenticated), counted, sorted, and stored by the chip recycler 242. If gaming chips 103 are to be paid out to patrons, exchanged for cash, or exchanged for other gaming chips 103, then the gaming table 206 or the chip validation system 215 can instruct the chip recycler 242 how much in gaming chips 103. The denominations to pay out can also be specified. A chip recycler 242 within a cashier cage, a bank or vault, or kiosk (not shown) can operate in a similar fashion. A user places the gaming chips 103 in the chip recycler 242, the chip recycler 242 processes the gaming chips 103, and the chip recycler 242 either automatically outputs gaming chips 103 in other denominations or outputs cash equal to the input value.

Existing systems only rely on RFID technology read serial numbers of gaming chips. The security of those systems relies only on 2 things: 1) Uniqueness of the serial numbers of the tags provided by the microchips or integrated circuits manufacturers; and 2) protection of the system database against unauthorized access that would reactivate a tag or add a record for a wrong gaming chip that was not produced by an approved currency manufacturer. When a database hack occurs, the currency system of the casino can be manipulated. A counterfeiter could change in the database the face value of the associated tags. The counterfeiter could retrieve the RFID tags from low denomination chips from the property and produce fake chips of a much higher denomination.

In the present disclosure, the gaming chips 103 are secured through multiple faucets to insure that a breach of any one security does not compromise the gaming chip 103. As one faucet, each gaming chip 103 is assigned a unique serial number. To compromise a gaming chip 103, a counterfeiter would need to make an RFID tag with a serial number that matches a valid gaming chip 103 in the currency data 221. Further, the data stored on the counterfeit gaming chip 103 would need to be encoded based on a secure memory mapping 218.

If an intruder were able to crack the encryption of the currency data 221 to edit the value of existing gaming chips 103, the denomination and other variable information stored on the gaming chip 103 would not match the currency data 221. Further, the denomination indicated by the appearance of the gaming chip 103 would not match.

If an intruder were able to crack the encryption of the memory mapping 218 to enable encoding/decoding of the information to store new information on a gaming chip 103, the currency data 221 would not match any edited data. Further, in some embodiments, the data may be permanently locked into the gaming chip 103. A counterfeiter would need to make an RFID tag with a serial number that matches a valid gaming chip 103 in the currency data 221. At least a subset of the data stored on the fraudulent gaming chip 103 would need to match the valid gaming chip 103 from the currency data 221. As such, the security methods described herein prevent access from counterfeiters on the gaming floor, internal casino employees that may collude to steal from the casino, and employees that develop the gaming chip technology.

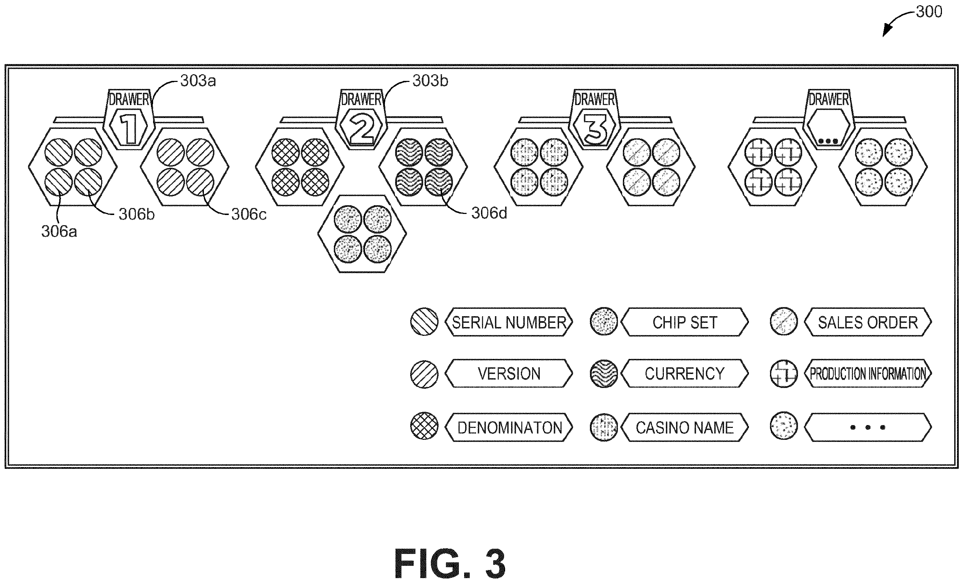

Turning to FIG. 3, shown is a set of drawers 300 storing variables according to various embodiments of the present disclosure. The set of drawers 300 can include a first drawer 303a and a second drawer 303b, among other drawers. The set of drawers correspond to a gaming chip used in a casino. The drawer 303a can store a serial number as component 306a, component 306b, and other components as shown. The drawer 303a can also store a version in 306c among other components. The drawer 303b can store a currency in component 306d among other components. The set of drawers 300 corresponds to data stored on a gaming chip without being encoded.

When the gaming chips 103 are created, the variables to be written to each gaming chip 103 can be generated in memory similar to the mapping shown in the set of drawers 300. The generated memory can be encoded prior to being written to the gaming chip 103. Similarly, when the encoded data is read from a gaming chip 103, the chip validation system 215 can decode the encoded data such that the decoded data looks like the set of drawers 300.

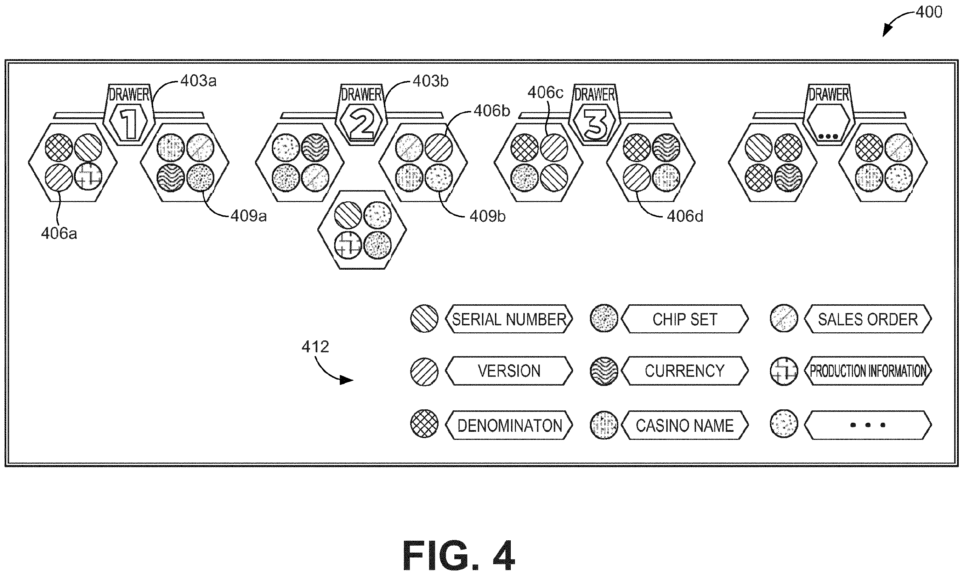

Turning to FIG. 4, shown is a set of drawers 400 storing encoded variables according to various embodiments of the present disclosure. The set of drawers 400 can include a first drawer 403a and a second drawer 403b, among other drawers. The set of drawers 400 can store various components including components 406a-d and 409a and b. The set of drawers correspond to a gaming chip 103 used in a casino. The set of drawers can store various components of variables encoded across the drawers. A schema used to encode the variables in the drawers can be rolled over time. As an example, a schema can change and a version number can increment every six months, annually, after each order, after every ten orders, after a predetermined number of gaming chips 103 are manufactured, or on another frequency. Each variable stored in the set of drawers can have multiple components stored in different drawers. The location of each component is determined based on the memory mappings 218. As an example in one embodiment, a version number can have four components stored as component 406a-d. Other variables can have components store in drawers such as components 409a and 409b. The set of drawers 400 can be read by a gaming chip reader, such as an RFID antenna. As an example, a gaming chip reader on a gaming table 206 (FIG. 2) can read a set of drawers 400 when a gaming chip 103 is placed on a bet spot 239. The gaming table 206 can transmit the set of drawers 400 to the chip validation system 215 via the network 209.

When the chip validation system 215 receives the set of drawers 400, the chip validation system 215 can identify the version of the gaming chip 103. The components of the version number can be stored in predetermined positions in the set of drawers 400. In some embodiments, the serial number can be identified without decoding the set of drawers 400 and the chip validation system 215 can identify the version number of the gaming chip 103 by looking up the serial number in the currency data 221. In some embodiments, the serial number or version can be read separate from the drawers.

The chip validation system 215 can decrypt the memory mapping 218 and decode the data stored in the set of drawers 400. As an example, the chip validation system 215 can decode the variables stored in the set of drawers 400 to look like the set of drawers 300. The chip validation system 215 can load the data from the set of drawers 400 into variables corresponding to the list of variables 412.

In some embodiments, the location of the components of the version number can be fixed across all versions while the locations of components for other variables can be varied across each version. The drawer 403a can store a serial number as component 406a, component 406b, and other components as shown. The drawer 403a can also store a version in 406c among other components. The drawer 403b can store a currency in component 406d among other components. The set of drawers 400 corresponds to data stored on a gaming chip without being encoded.

According to some embodiments, the data can be stored in drawers 400 according to the shown memory mapping. As an example, each page of memory can carry a series of 16 bits, or other sizes, that will describe the information based on a method of calculating the information or a reference chart. This encoding solution can be used by the gaming chip 103 manufacturers when they program or personalize the gaming chips 103 before shipping to a customer. A similar solution can be used to decode the information read when the gaming chips 103 are received by the casino using the chip validation system 215, which can be provided by the chips manufacturer. The chip validation system 215 can not only receive the gaming chips 103, but also authenticate and track the gaming chips 103 throughout the casino where gaming chip readers are located, such as, for example, at the cages, in the vaults or at the table. The manufacturers can provide a database with information for all of the gaming chips 103 in an encrypted way that can be imported into currency data 221. The database can provide a list of gaming chips 103 including the details of what to evaluate to accept and considered genuine when authentication is performed.

As an example, the chip validation system 215 can use the gaming chip reader to read of the serial number of each gaming chip 103. The chip validation system 215 can verify the serial number against the currency data 221 that all the serial numbers read are genuine and authorized, meaning supposed to be in circulation in this property. Based on the serial number, the chip validation system 215 can pull all the information and characteristics of each gaming chip 103. The chip validation system 215 can use the gaming chip reader to read the memory of each RFID tag in the gaming chips 103 and check every single page or drawer. The chip validation system 215 can decode the pages or drawers to figure out the information for the gaming chips 103. The chip validation system 215 can compare the decoded information with the information pulled from currency data 221. In addition to the above authentication process, the chip validation system 215 can also verify the gaming chips 103 movements and the previous locations in the casino.

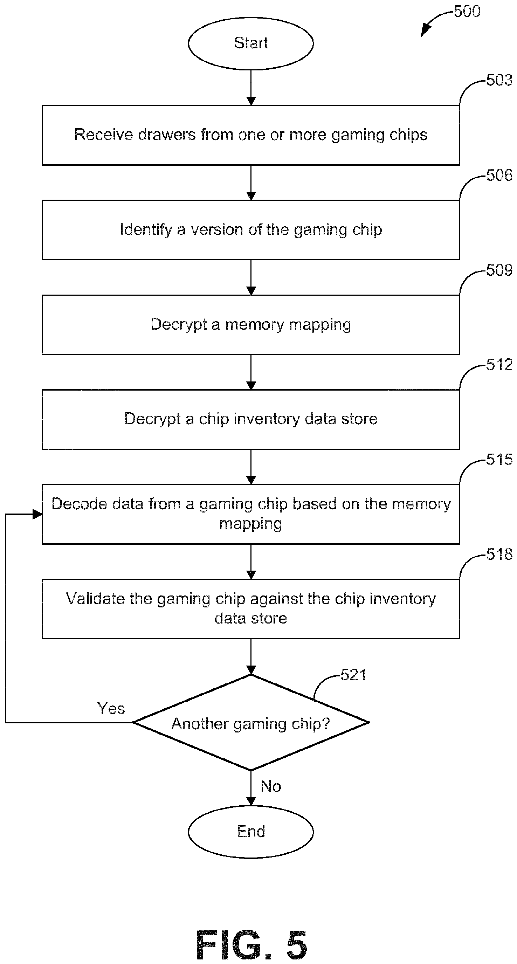

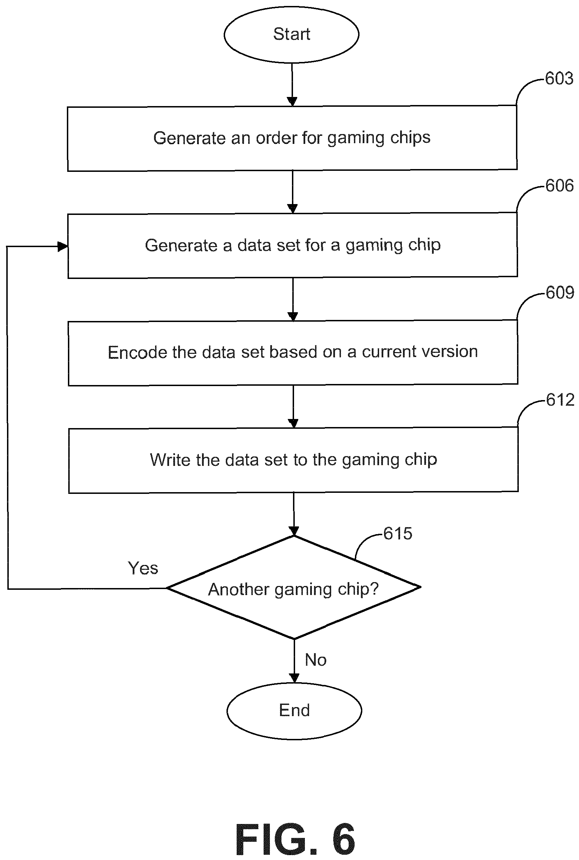

Before turning to the process flow diagrams of FIGS. 5 and 6, it is noted that embodiments described herein may be practiced using an alternative order of the steps illustrated in FIGS. 5 and 6. That is, the process flows illustrated in FIGS. 5 and 6 are provided as examples only, and the embodiments may be practiced using process flows that differ from those illustrated. Additionally, it is noted that not all steps are required in every embodiment. In other words, one or more of the steps may be omitted or replaced, without departing from the scope of the embodiments. Further, steps may be performed in different orders, in parallel with one another, or omitted entirely, and/or certain additional steps may be performed without departing from the scope and spirit of the embodiments.

With reference to FIG. 5, shown is a flow diagram for a process 500 according to various embodiments of the present disclosure. At box 503, the process 500 includes receiving drawers from one or more gaming chips. For example, the chip validation system 215 can receive data from one or more gaming chips 103 from a gaming table 206. A gaming chip reader can read sets of drawers individually corresponding to different gaming chips 103 located on the gaming chip reader. The chip validation system 215 can process the sets of drawers for the gaming chips 103.

At box 506, the process 500 includes identifying a version of the gaming chip. For example, the chip validation system 215 can identify a version of the gaming chip 103 from the drawers. In one example, the chip validation system 215 can calculate various pointers to a memory segment containing the plurality of drawers. The chip validation system 215 can copy bits, bytes, words, or another size of memory from the pointers to a memory location to piece together the version. In another example, the version can be stored without being encoded.

At box 509, the process 500 includes decrypting a memory mapping. For example, the chip validation system 215 can load an encryption key for the memory mapping 218. The encryption key can be stored in encryption data 224. The memory mapping 218 can be encrypted with advanced encryption standard (AES) encryption, Rivest-Shamir-Adleman (RSA) encryption, or some other type of encryption.

At box 512, the process 500 includes decrypting a chip inventory data store. For example, the chip validation system 215 can decrypt the currency data 221. In some embodiments, the currency data 221 can correspond to an encrypted database, such as, for example, a structured query language (SQL) server with encryption among other encrypted databases. Similarly, the memory mapping 218 can be an encrypted database. The encrypted database can be loaded with an encryption key to enable decryption during use by the chip validation system 215. The encryption key for the currency data 221 can differ from the encryption key for the memory mapping 218.

At box 515, the process 500 includes decoding data from a gaming chip based on the memory mapping. The chip validation system 215 can load a formula for deciphering a gaming chip 103 from the memory mapping 218. The memory mapping 218 can include information for how to decipher the data stored on different versions of gaming chips 103. The chip validation system 215 can load the data from each of a set of variables into memory from the drawers of each gaming chip 103.

At box 518, the process 500 includes validating the gaming chip against the chip inventory data store. The chip validation system 215 can verify that the set of variables loaded from the drawers matches the variables 227 loaded on the gaming chip 103 when the gaming chip 103 was manufactured. The chip validation system 215 can verify that the gaming chip 103 is currently active for use at the casino. If the validation fails, the chip validation system 215 can initiate a remedial action.

At box 521, the process 500 includes determining whether another gaming chip is to be processed. If so, the process 500 moves to box 515. Otherwise, the process 500 ends.

With reference to FIG. 6, shown is a flow diagram for a process 600 according to various embodiments of the present disclosure. At box 603, the process 600 includes generating an order for gaming chips. For example, the computing environment 203 (FIG. 2) can receive an order from a casino to purchase gaming chips 103. The order can include a quantity of gaming chips 103 for each denomination. The order can also include a currency of money being used, a sales order number, a casino name placing the order, and other information.

At box 606, the process 600 includes generating a data set for a gaming chip. For example, the computing environment 203 can compile a set variables to be written on each gaming chip 103 from the order. The set of variables can be stored into a memory segment mirroring an un-encoded version of the drawers as shown in FIG. 3. The computing environment 203 can verify that the gaming chip 103 has not been previously programmed before proceeding. Some of the variables in the set can come from the order, such as the currency of money being used, a sales order number, a casino name placing the order, and other information. Other variables in the set can be generated by the computing environment 203. As an example, the computing environment 203 can determine the chip set, version, and product information. In some embodiments, the computing environment 203 can generate a random number for the serial number. In other embodiments, the serial number is preprogrammed into RFID tags when the RFID tags are manufactured. The computing environment 203 can read the serial number from preprogrammed RFID tags when writing data and store the serial number in variables 227 associated with the set of variables for the gaming chip 103.

At box 609, the process 600 includes encoding the data set based on a current version. For example, the computing environment can encode variables for storage in drawers on the gaming chip 103 using a memory mapping 218 for a current version being manufactured. The current version can be incremented at a predetermined frequency to ensure that gaming chips 103 used in the field are encoded with different schemas using different ciphers. Each version of gaming chips 103 can be encoded with a different schema/cipher. A different encryption key can also be used to encrypt the data on the gaming chip 103. In some embodiments, different gaming chips in a single order can be encoded with different version numbers using different ciphers.

At box 612, the process 600 includes writing the data set to the gaming chip. The computing environment 203 can write the encoded data from box 609 to the gaming chip 103. The computing environment 203 can be coupled to RFID transceivers and RFID antennas configured to write to the gaming chip 103 and lock it. The data stored on the gaming chip 103 can be locked to prevent future editing.

At box 615, the process 600 includes determining whether another gaming chip is in the order. If so, the process 600 moves to box 606. Otherwise, the process 600 ends.

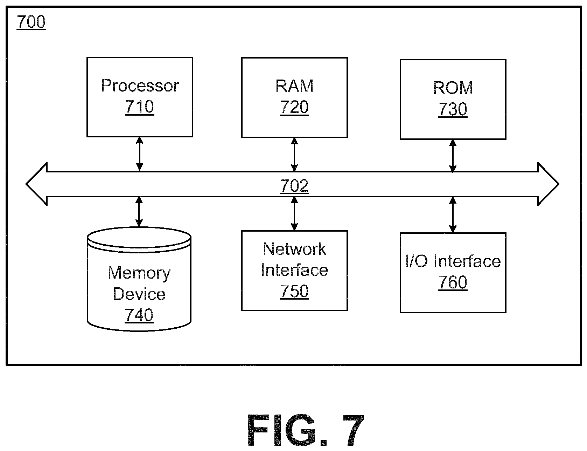

Turning to FIG. 7, an example hardware diagram of a computing device 700 is illustrated. Any of the chip validation system 215, gaming table 206, or any other functionality discussed herein may be implemented, in part, using one or more elements of the computing device 700. The computing device 700 can include one or more of a processor 710, a Random Access Memory ("RAM") 720, a Read Only Memory ("ROM") 730, a memory device 740, a network interface 750, and an Input Output ("I/O") interface 760. The elements of the computing device 700 are communicatively coupled via a bus 702.

The processor 710 can include an arithmetic processor, Application Specific Integrated Circuit ("ASIC"), or other types of hardware or software processors. The RAM and ROM 720 and 730 can include a memory that stores computer-readable instructions to be executed by the processor 710. The memory device 740 stores computer-readable instructions thereon that, when executed by the processor 710, direct the processor 710 to execute various aspects of the present disclosure described herein. When the processor 710 includes an ASIC, the processes described herein may be executed by the ASIC according to an embedded circuitry design of the ASIC, by firmware of the ASIC, or both an embedded circuitry design and firmware of the ASIC. As a non-limiting example group, the memory device 740 comprises one or more of an optical disc, a magnetic disc, a semiconductor memory (i.e., a semiconductor, floating gate, or similar flash based memory), a magnetic tape memory, a removable memory, combinations thereof, or any other known memory means for storing computer-readable instructions. The network interface 750 can include hardware interfaces to communicate over data networks. The I/O interface 760 can include device input and output interfaces such as keyboard, pointing device, display, communication, and other interfaces. The bus 702 can electrically and communicatively couple the processor 710, the RAM 720, the ROM 730, the memory device 740, the network interface 750, and the I/O interface 760, so that data and instructions may be communicated among them.

In operation, the processor 710 is configured to retrieve computer-readable instructions stored on the memory device 740, the RAM 720, the ROM 730, or another storage means, and copy the computer-readable instructions to the RAM 720 or the ROM 730 for execution, for example. The processor 710 is further configured to execute the computer-readable instructions to implement various aspects and features of the present disclosure. For example, the processor 710 may be adapted and configured to execute the processes described above with reference to FIGS. 5 and 6, including the processes described as being performed by the computing environment 203 including the chip validation system 215 and gaming table 206. Also, the memory device 740 may store the data stored in the data store 212.

A phrase, such as "at least one of X, Y, or Z," unless specifically stated otherwise, is to be understood with the context as used in general to present that an item, term, etc., can be either X, Y, or Z, or any combination thereof (e.g., X, Y, and/or Z). Similarly, "at least one of X, Y, and Z," unless specifically stated otherwise, is to be understood to present that an item, term, etc., can be either X, Y, and Z, or any combination thereof (e.g., X, Y, and/or Z). Thus, as used herein, such phrases are not generally intended to, and should not, imply that certain embodiments require at least one of either X, Y, or Z to be present, but not, for example, one X and one Y. Further, such phrases should not imply that certain embodiments require each of at least one of X, at least one of Y, and at least one of Z to be present.

Although embodiments have been described herein in detail, the descriptions are by way of example. The features of the embodiments described herein are representative and, in alternative embodiments, certain features and elements may be added or omitted. Additionally, modifications to aspects of the embodiments described herein may be made by those skilled in the art without departing from the spirit and scope of the present disclosure defined in the following claims, the scope of which are to be accorded the broadest interpretation so as to encompass modifications and equivalent structures.

## Claims

1. A system comprising:
a data store comprising an encrypted memory mapping and a gaming chip inventory dataset;
a gaming chip reader; and
at least one computing device in communication with the data store and the gaming chip reader, the at least one computing device configured to at least:
receive a plurality of drawers corresponding to a gaming chip from the gaming chip reader;
identify a version from one of the plurality of drawers;
decrypt the encrypted memory mapping to generate a decrypted memory mapping;
decode data describing the gaming chip from the plurality of drawers based at least in part on the decrypted memory mapping; and
validate the gaming chip against the gaming chip inventory dataset based at least in part on the data describing the gaming chip.

2. The system of claim 1, wherein individual ones of the plurality of drawers comprise at least one of a memory page, a memory block, a byte, or a word.

3. The system of claim 1, wherein the at least one computing device is further configured to at least:
receive a plurality of second drawers corresponding to a second gaming chip from the gaming chip reader;
identify a second version from one of the plurality of second drawers;
decode data describing the second gaming chip from the plurality of second drawers based at least in part on the decrypted memory mapping; and
validate the second gaming chip against the gaming chip inventory dataset based at least in part on the data describing the gaming chip.

4. The system of claim 3, wherein the version differs from the second version, the data describing the gaming chip is encoded with a first cipher corresponding to the version, and the data describing the second gaming chip is encoded with a second cipher corresponding to the second version.

5. The system of claim 1, wherein the at least one computing device is further configured to at least decrypt the gaming chip inventory dataset prior to validating the gaming chip against the gaming chip inventory dataset.

6. The system of claim 5, wherein the encrypted memory mapping is encrypted based at least in part on a first encryption key and the gaming chip inventory dataset is encrypted based at least in part on a second encryption key.

7. The system of claim 1, wherein a respective plurality of components of each of a plurality of variables are individually stored in a respective drawer of the plurality of drawers.

8. The system of claim 7, wherein each of the plurality of drawers stores a respective component from each of the plurality of variables.

9. A method comprising:
reading, via a gaming chip reader, a plurality of drawers corresponding to a gaming chip;
identifying, via at least one computing device, a version from one of the plurality of drawers;
decrypting, via the at least one computing device, an encrypted memory mapping to generate a decrypted memory mapping;
decoding, via the at least one computing device, data describing the gaming chip from the plurality of drawers based at least in part on the decrypted memory mapping; and
validating, via the at least one computing device, the gaming chip against a gaming chip inventory dataset based at least in part on the data describing the gaming chip.

10. The method of claim 9, wherein the gaming chip inventory dataset comprises all gaming chips authorized for use at a casino.

11. The method of claim 9, further comprising:
reading, via the gaming chip reader, a plurality of second drawers corresponding to a second gaming chip;
identifying, via the at least one computing device, a second version from one of the plurality of second drawers;
decoding, via the at least one computing device, data describing the second gaming chip from the plurality of second drawers based at least in part on the decrypted memory mapping; and
validating, via the at least one computing device, the second gaming chip against the gaming chip inventory dataset based at least in part on the data describing the gaming chip.

12. The method of claim 11, wherein the version differs from the second version, the data describing the gaming chip is encoded with a first cipher corresponding to the version, and the data describing the second gaming chip is encoded with a second cipher corresponding to the second version.

13. The method of claim 9, further comprising decrypting, via the at least one computing device, the gaming chip inventory dataset prior to validating the gaming chip against the gaming chip inventory dataset.

14. The method of claim 13, wherein the encrypted memory mapping is encrypted based at least in part on a first encryption key and the gaming chip inventory dataset is encrypted based at least in part on a second encryption key.

15. The method of claim 9, wherein a respective plurality of components of each of a plurality of variables are individually stored in a respective drawer of the plurality of drawers.

16. The method of claim 9, wherein each of the plurality of drawers stores a respective component from each of a plurality of variables.

17. A non-transitory computer-readable medium embodying a program that, when executed by at least one computing device, causes the at least one computing device to at least:
receive a plurality of drawers corresponding to a gaming chip;
identify a version from the gaming chip;
decrypt an encrypted memory mapping to generate a decrypted memory mapping;
decode data describing the gaming chip from the plurality of drawers based at least in part on the decrypted memory mapping; and
validate the gaming chip against a gaming chip inventory dataset based at least in part on the data describing the gaming chip.

18. The non-transitory computer-readable medium of claim 17, wherein the program further causes the at least one computing device to at least:
receive a plurality of second drawers corresponding to a second gaming chip;
identify a second version from one of the plurality of second drawers;
decode data describing the second gaming chip from the plurality of second drawers based at least in part on the decrypted memory mapping; and
validate the second gaming chip against the gaming chip inventory dataset based at least in part on the data describing the gaming chip.

19. The non-transitory computer-readable medium of claim 17, wherein the encrypted memory mapping comprises an encrypted file and the gaming chip inventory dataset comprises an encrypted database.

20. The non-transitory computer-readable medium of claim 17, wherein the program further causes the at least one computing device to at least identify a serial number from the gaming chip, where the version is based at least in part on the serial number.
